# EUROPEAN PATENT SPECIFICATION

(11) **EP 2 415 147 B1**
(45) Date of publication and mention of the grant of the patent: **09.01.2013**
(21) Application number: 10716037.6
(22) Date of filing: 23.03.2010
(51) Int. Cl.: H02M 7/487

(54) **DEVICE AND METHOD FOR CONVERTING DIRECT CURRENT INTO ALTERNATE CURRENT**
EINRICHTUNG UND VERFAHREN ZUM UMWANDELN VON GLEICHSTROM IN WECHSELSTROM
DISPOSITIF ET PROCÉDÉ POUR CONVERTIR UN COURANT CONTINU EN COURANT ALTERNATIF

(30) Priority: 31.03.2009 IT MO20090080
(43) Date of publication of application: 08.02.2012
(73) Proprietor: Bticino S.p.A., 20154 Milano (IT)
(72) Inventor: MALDINI, Giorgio, I-42027 Montecchio Emilia (RE) (IT); BUONOCUNTO, Nicola, I-42122 Reggio Emilia (IT); PATSEVITCH, Vladislav, I-33052 Cervignano del Friuli (IT); PETRELLA, Roberto, I-33010 Tavagnacco (IT); REVELANT, Alessandro, I-33013 Gemona del Friuli (IT); STOCCO, Piero, I-33035 Martignacco (IT)
(74) Representative: Brunacci, Marco
(86) International application number: PCT/IB2010/000640
(87) International publication number: WO 2010/113002

(56) References cited:
- EP-A- 0 567 082
- DE-A1- 4 206 263
- DE-A1- 4 302 282
- US-A- 5 587 891
- VELAERTS B ET AL: "NEW DEVELOPMENTS OF 3-LEVEL PWM STRATEGIES" PROCEEDINGS OF THE EUROPEAN CONFERENCE ON POWER ELECTRONICS AND APPLICATIONS. (EPE). AACHEN, 9 - 12 OCTOBER, 1989, DUSSELDORF, EPE SECRETARIAT, DE, vol. 1, 9 October 1989 (1989-10-09), pages 411-416, XP000143426
- WELCHKO B A ET AL: "A three-level MOSFET inverter for low power drives" IECON-2002. PROCEEDINGS OF THE 28TH. ANNUAL CONFERENCE OF THE IEEE INDUSTRIAL ELECTRONICS SOCIETY. SEVILLA, SPAIN, NOV. 5 - 8, 2002; [ANNUAL CONFERENCE OF THE IEEE INDUSTRIAL ELECTRONICS SOCIETY], IEEE, NEW YORK,NY, US, vol. 2, 5 November 2002 (2002-11-05), pages 1267-1272, XP010632887 ISBN: 978-0-7803-7474-4

## Description

### Technical Field

The present invention relates to a device and method for converting direct current into alternating current.

### Background art

The use has been common and known for some time of electronic apparatus so-called "inverters" suitable for converting an input direct current into an output alternating current.

The applications of the inverters are numerous and go, e.g., from the use in UPS units for the conversion of direct current from a supply battery to use in industry for regulating the speed of electric motors or, again, to use in industry to convert the electricity coming from production plants, before introduction into the distribution grid.

A particular type of inverter is the multilevel inverter so-called NPC (Neutral Point Clamped), which is able to supply more than two output power levels so as to generate a wave form as close as possible to the sinusoid shape.

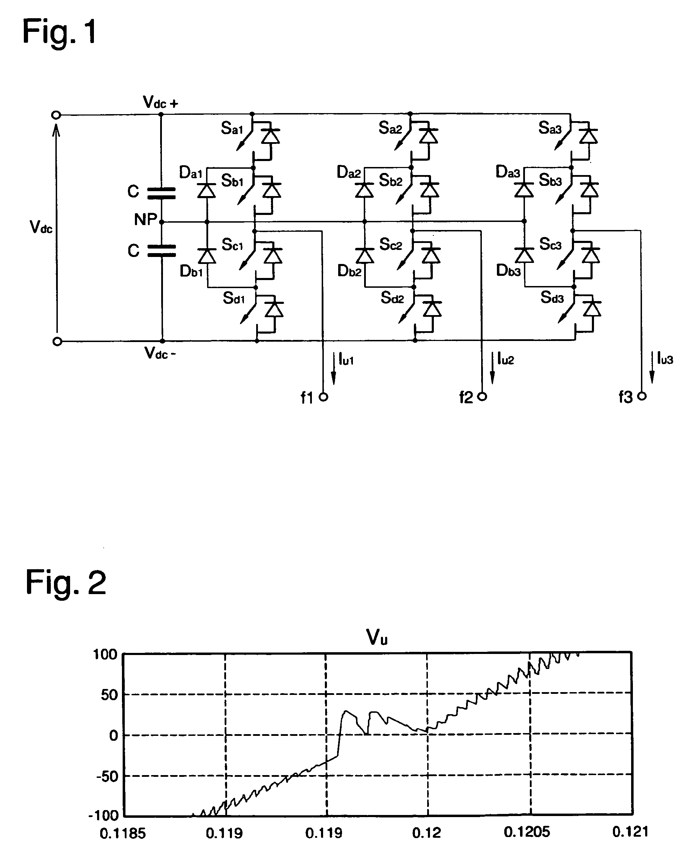

By way of example, figure 1 shows the general diagram of a three-phase three-level NPC inverter.

The inverter of figure 1 has an input branch composed of two condensers C in series with each other and associated with a source of direct current V_{dc} at a positive voltage terminal V_{dc}+, at a negative voltage terminal V_{dc}- and at a neutral point NP between the two condensers C.

The inverter comprises three electronic power switch units, such as Mosfet, IGBT or similar devices, indicated with the references Sₐ₁-S_{d1}, Sₐ₂-S_{d2} and Sₐ₃-S_{d3}, which are suitably connected together on three branches, one for each phase f1, f2 and f3.

The inverter also comprises three pairs of diodes, indicated in figure 1, with the references Dₐ₁ and D_{b1}, Dₐ₂ and D_{b2}, Dₐ₃ and D_{b3} respectively.

With reference to the branch relating to phase f1**,** e.g., the diodes Dₐ₁ and D_{b1} are arranged in series the one with the other and connect the neutral point NP, respectively, to the connection point between the switches Sₐ₁ and S_{b1} and to the connection point between the switches S_{c1} and S_{d1}.

The diodes Dₐ₂, D_{b2}, Dₐ₃ and D_{b3} are similarly connected with the branches relating to the phases f2 and f3.

By commanding the closing of the switches Sₐ₁-S_{d1}, Sₐ₂-S_{d2} and Sₐ₃-S_{d3} it is possible to connect each of the phases to the positive of the voltage V_{dc}+, to the negative of the voltage V_{dc}- and to the node NP (Neutral Point) where the voltage is equal to zero if taken as reference.

The rapid switch of the switches between the possible configurations is done by means of suitable modulation techniques, so as to obtain an alternating output voltage and current on the three phases, starting with the direct current V_{dc}.

One of such modulation techniques is the so-called unipolar modulation of the inverter branches, in which the switches of each branch are on or off according to the variation of a periodical reference voltage.

In particular, with reference by way of example to the branch of the phase f1, the configuration of the switches Sₐ₁, S_{b1}, S_{c1} and S_{d1} is shown below.

During the positive half wave of the reference voltage:
- switching of the switch Sₐ₁ at a preset switching frequency;
- switch S_{b1} always on;
- switch S_{c1} and S_{d1} always off.

During the negative half wave of the reference voltage:
- switching of the switch S_{d1} at a preset switching frequency;
- switch S_{c1} always on:
- switches Sₐ₁ and S_{b1} always off.

The unipolar modulation technique has a number of drawbacks however.

In fact, close to the zero crossing of the output current, meant as the instant in which the ideal current at output on the branch is equal to zero, a distortion on the actual output voltage occurs.

This is due to operation in DCM (Discontinuous Conduction Mode) of the branch current.

In particular, when the average value of the current in the charge inductance is close to cancelling itself out, a spurious oscillatory component (ripple) superimposed on it cannot cross the zero, causing an instantaneous variation of the current gradient which flows into the inductance and thus causes a variation of voltage at the heads of the inductance itself.

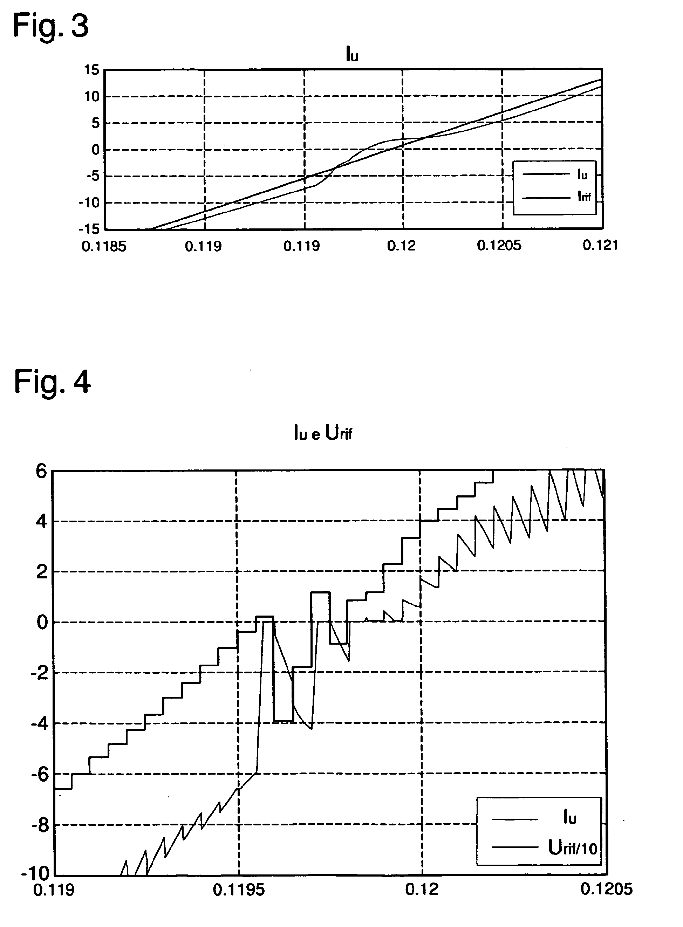

For greater clarity, and by way of example only, the figure 2 and the figure 3 show the patterns of voltage and current Vᵤ and Iᵤ respectively coming out of one of the branches in the case of unipolar modulation, from which is clear the presence of the distortions of the signals near the zero crossing.

In particular, figure 3 shows the pattern of output current Iᵤ near the zero crossing compared to the pattern of an ideal output current I_{rif}.

The modulation of unipolar type, furthermore, has further drawbacks in the case of the reference voltage and the output current having, at a particular instant or time interval, opposite signs, e.g., in the case of the reference voltage being sinusoid and in advance with respect to the output current Iᵤ.

In this case, at the change of sign of the reference voltage, the current can no longer continue to circulate in the same direction and is forced to zero.

Such patterns of the reference voltage and of the output current Iᵤ are shown by way of example in the figure 4, in which the reference current is indicated by the wording U_{rif}.

To overcome the drawbacks of the unipolar modulation, alternative techniques are known, such as the so-called complementary modulation of the inverter branches.

In particular, with reference by way of example to the branch of the phase f1, the configuration of the switches Sₐ₁, S_{b1}, S_{c1} and S_{d1} is shown below.

During the positive half wave of the reference voltage:
- switching of the switches Sₐ₁ and S_{c1} at a preset switching frequency;
- switch S_{b1} always on;
- switch S_{d1} always off.

During the negative half wave of the reference voltage:
- switching of the switches S_{d1} and S_{b1} at a preset switching frequency;
- switch S_{c1} always on:
- switch Sₐ₁ always off.

The complementary modulation technique also has a number of drawbacks however.

In particular, the central switches that switch at the switching frequency are not covered by current and, consequently, when the output current is not near the zero crossing numerous pointless switches are made.

This involves an inevitable increase in energy losses tied to the piloting circuit of the central switches of each branch and additional losses on the diodes tied to the respective dispersion currents.

Furthermore, the correct operation of the inverter requires adequate sizing of the piloting circuit of the central switches.

### Object of the Invention

The main aim of the present invention is to provide a device and a method for converting direct current into alternating current that allow to eliminate the disturbances present at the zero crossing of the output current and which, at the same time, allows cutting energy losses to the utmost.

Another object of the present invention is to provide a device and a method for converting direct current into alternating current which allow to overcome the mentioned drawbacks of the known art in the ambit of a simple, rational, easy, effective to use and low cost solution.

The above objects are achieved by the present device for converting direct current into alternating current, comprising at least a multilevel converter associated with at least a source of direct current and at least a modulation unit having piloting means for piloting said converter for the conversion of said direct current into an alternating output current, characterised by the fact that said modulation unit comprises comparison means for comparing said output current value with at least a preset positive threshold value and at least a preset negative threshold value, said piloting means being suitable for piloting said converter with a pulse modulation of the unipolar type in the event of said output current value being above said positive threshold value or below said negative threshold value and with a pulse modulation of the complementary type in the event of said output current value being below said positive threshold value and above said negative threshold value.

The above objects are achieved by the present method for converting direct current into alternating current comprising at least a piloting phase of a multilevel converter for the conversion of a direct voltage into an alternating output voltage, characterised by the fact that it comprises at least a comparison phase of said output current value with at least a preset positive threshold value and at least a preset negative threshold value, said piloting phase being suitable for piloting said converter with a pulse modulation of the unipolar type in the event of said output current value being above said positive threshold value or below said negative threshold value and with a pulse modulation of the complementary type in the event of said output current value being below said positive threshold value and above said negative threshold value.

### Brief Description of the Drawings

Other characteristics and advantages of the present invention will become more evident from the description of a preferred, but not sole, embodiment of a device and a method for converting direct current into alternating current, illustrated purely as an example but not limited to the annexed drawings in which:
figure 5 is a general block diagram of the device according to the invention;
figure 6 is a circuit diagram that shows a possible embodiment of a multilevel converter of the device according to the invention;
figure 7 is a graph that schematically shows a possible connection between the output current pattern of the device according to the invention and the operation of the device itself;
figures 8 and 9 are graphs and functional diagrams that show the possible configurations of the multilevel converter of the device according to the invention in the case of unipolar modulation;
figures 10 and 11 are graphs and functional diagrams that show the possible configurations of the multilevel converter of the device according to the invention in the case of complementary modulation;
figure 12 is a graph that shows the patterns of a reference voltage at input to the modulation unit of the device according to the invention and of the output current of the multilevel converter of the device around the zero crossing of the output current itself;
figures 13 and 14 are graphs that show the patterns of the output current and voltage of the device according to the invention around the zero crossing of the output current itself.

### Embodiments of the Invention

With particular reference to the figures from 5 to 14, globally indicated by D is a device for converting direct current into alternating current, of the type usable in numerous common-type applications such as, e.g., inside UPS units for the conversion of the direct current generated by a battery, for the conversion of the direct current produced by photovoltaic modules or, again, for regulating the speed of electric motors.

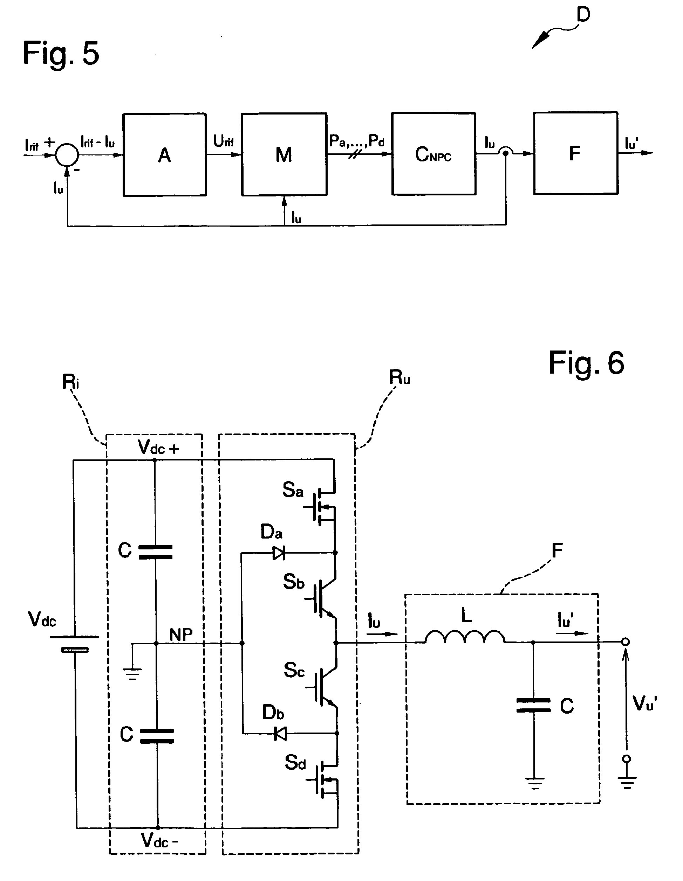

The device D, shown generally and schematically in figure 5, comprises a multi-level converter, of the type of an NPC (Neutral Point Clamped) converter or inverter, generically indicated by the reference C_{NPC}.

The device D comprises a modulation unit, generically indicated in figure 5 with the reference M, which has means for piloting the converter C_{NPC} for the conversion of a direct current V_{dc} entering the converter itself into an alternate output current Iᵤ.

The device D also comprises a source suitable for generating a reference current I_{rif} to be followed and means for calculating the difference between such reference current I_{rif} and the output current Iᵤ generated by means of the converter C_{NPC}.

In particular, these calculation means are schematised in figure 5 by means of a negative feedback control which detects the output current Iᵤ generated by the converter C_{NPC} and subtracts it from the reference current I_{rif} entering the device D.

The device D comprises a current control unit, generically indicated in figure 5 by the reference A, arranged downstream of the above calculation means and upstream of the modulation unit M, and which is operatively associated with the modulation unit M and which is provided with means for generating a reference voltage U_{rif}, generated according to the difference calculated between the reference current I_{rif} and the output current Iᵤ.

Advantageously, the piloting means of the modulation unit M are suitable for piloting the converter C_{NPC} according to the reference voltage U_{rif} and the output current Iᵤ.

The device D comprises, moreover, a filtering unit, generically indicated in figure 5 by the reference F, which is arranged downstream of the converter C_{NPC} and which is suitable for filtering the output current Iᵤ.

In particular, this filtering unit F can be made with a filter of the LC, LCL type or the like.

With particular reference to the embodiment described and illustrated in figure 6, the converter C_{NPC} is of the type of an NPC single-phase inverter with three voltage levels. Different embodiments cannot however be ruled out in which the converter C_{NPC} used is an inverter with more than three levels and/or of the multi-phase type.

In particular, the converter C_{NPC} comprises at least an input branch Rᵢ made up of two condensers C connected in series the one to the other and having a terminal connected to the positive pole V_{dc}+ of the source of direct current V_{dc} and an opposite terminal connected to the negative pole V_{dc-} of the source of direct current V_{dc}.

As an alternative to the source of direct current V_{dc} two independent voltage generators may be used, each being suitable for generating a voltage at the heads of respective condensers C or groups of condensers C.

It is further pointed out that the condensers C shown in the figure 6 can be representative of the series and/or of the parallel of several condensers physically made to realise the total necessary capacity.

The connection point between the two condensers C, indicated in figure 6 by the reference NP, is the zero-voltage neutral point of the converter C_{NPC}.

The converter C_{NPC} has an output branch Rᵤ comprising a first and a second electronic switch Sₐ and S_{b} connected in series the one to the other between the positive pole V_{dc}+ of the source of direct current V_{dc} and an output terminal, and a third and a fourth electronic switch S_{c} and S_{d} connected in series between the negative pole V_{dc-} of the source of direct current V_{dc} and the output terminal.

Each switch Sₐ, S_{b}, S_{c} and S_{d} is operatively associated with the modulation unit M.

In particular, the piloting means of the modulation unit M comprise means for generating four distinct control signals Pₐ, P_{b}, P_{c}, P_{d}, pulse width modulated (PWM) and suitable for controlling the first, the second, the third and the fourth switches Sₐ, S_{b}, S_{c} and S_{d} respectively.

The use cannot however be ruled out of switch control signals Sₐ, S_{b}, S_{c} and S_{d} modulated by means of different pulse modulation techniques.

Usefully, such switches Sₐ, S_{b}, S_{c} and S_{d} can consist of Mosfet, IGBT or other static commutation devices.

Furthermore, the output branch Rᵤ has a first diode Dₐ and a second diode D_{b}.

The first diode Dₐ has the anode connected to the input branch Rᵢ, at the neutral point NP, and the cathode connected to the connection point between the first switch Sₐ and the second switch S_{b}, while the second diode D_{b} has the cathode connected to the input branch Rᵢ, at the neutral point NP, and the anode connected to the connection point between the third switch S_{c} and the fourth switch S_{d}.

Usefully, the first and the second diode Dₐ and D_{b} and the diodes associated in anti-parallel with the switches Sₐ, S_{b}, S_{c} and S_{d}, not shown in figure 6, being of the known type, can be diodes with silicon or SiC (Silicon Carbide) substrate, which permit a reduction of losses due to switching.

It must be pointed out that, notwithstanding the fact that the particular embodiment of the illustrated and described device D envisages the use of a single-phase converter C_{NPC}, having therefore only one output branch Rᵤ, alternative embodiments cannot however be ruled out in which the converter C_{NPC} used is of the multi-phase type and therefore has several output branches Rᵤ, one for each phase of the alternating output current/voltage to be generated.

Advantageously, the modulation unit M comprises comparison means for comparing the output current value Iᵤ of the converter C_{NPC} with a preset positive threshold value Iₚ and with a preset negative threshold value Iₙ.

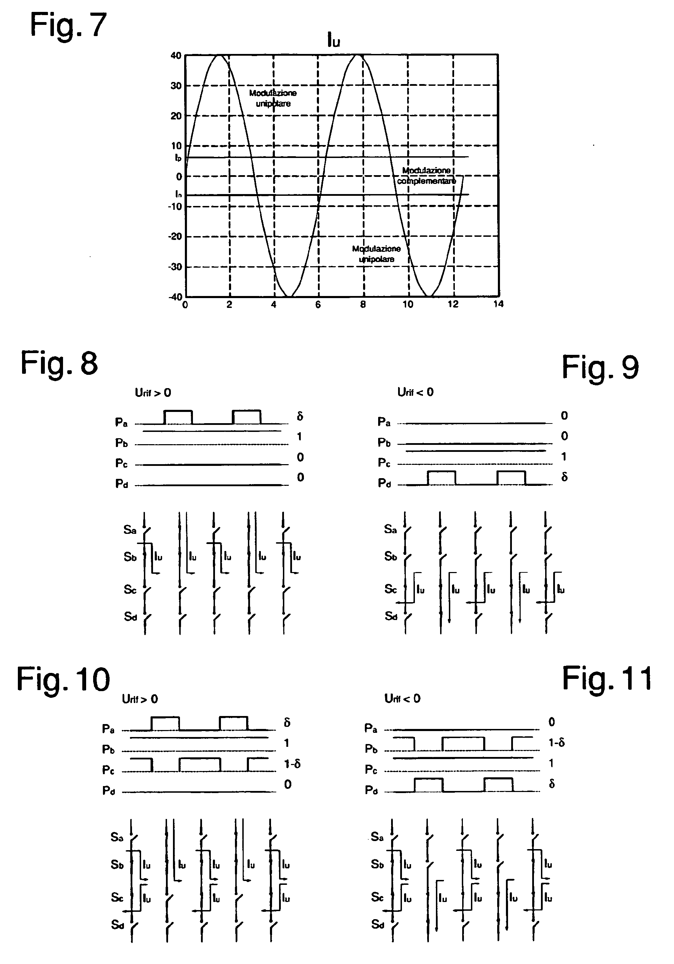

As schematically shown in the graph in figure 7, the piloting means of the modulation unit M are suitable for piloting the converter C_{NPC}, in particular the switches Sₐ, S_{b}, S_{c} and S_{d}, with a modulation of unipolar type of the signals Pₐ, P_{b}, P_{c}, P_{d} in the event of the output current value Iᵤ being above the positive threshold value Iₚ or lower than the negative threshold value Iₙ and with a modulation of complementary type of the signals Pₐ, P_{b}, P_{c}, P_{d} in the event of the output current value Iᵤ being below the positive threshold value Iₚ and above the negative threshold value Iₙ.

In detail, in the event of the output current value Iᵤ being above the positive threshold value Iₚ and of the reference voltage U_{rif} being above zero, the piloting means of the modulation unit M are suitable for piloting the converter C_{NPC} with a pulse width modulation of the unipolar type in which, as shown in the figure 8:
- the first switch Sₐ is periodically switched to a preset frequency by means of the signal Pₐ;
- the second switch S_{b} is always on;
- the third and fourth switches S_{c} and S_{d} are always off.

In the event of the output current value Iᵤ being below the negative threshold value Iₙ and the reference voltage U_{rif} being lower than zero, the piloting means of the modulation unit M are suitable for piloting the converter C_{NPC} with a pulse width modulation of unipolar type in which, as shown in the figure 9:
- the fourth switch S_{d} is periodically switched at a preset frequency by means of the signal P_{d};
- the third switch S_{c} is always on;
- the first and second switches Sₐ and S_{b} are always off.

In the event of the output current value Iᵤ being below the positive threshold value Iₚ and the reference voltage U_{rif} being higher than zero, the piloting means of the modulation unit M are suitable for piloting the converter C_{NPC} with a pulse width modulation of complementary type in which, as shown in the figure 10:
- the first switch Sₐ and the third switch S_{c} are periodically switched at a preset frequency and in a complementary way to each other by means of the signals Pₐ and P_{c};
- the second switch S_{b} is always on;
- the fourth switch S_{d} is always off.

In the event of the output current value Iᵤ being above the preset negative threshold value Iₙ and the reference voltage U_{rif} being lower than zero, the piloting means of the modulation unit M are suitable for piloting the converter C_{NPC} with a pulse width modulation of complementary type in which, as shown in the figure 11:
- the second switch S_{b} and the fourth switch S_{d} are periodically switched at a preset frequency and in a complementary way to each other by means of the signals P_{b} and P_{d};
- the third switch S_{c} is always on;
- the first switch Sₐ is always off.

The combined use of the unipolar modulation and of the complementary modulation allows, in particular, maintaining the output current Iᵤ in CCM (Continuous Current Mode) around the current zero crossing and ensures the correct operation of the converter C_{NPC} even in the case in which the voltage on the output branch Rᵤ has, in some instants or time periods, an opposite sign with respect to the output current Iᵤ.

This way, the distortions of output voltage Vᵤ generated by the converter C_{NPC} at the zero crossing of the output current Iᵤ are eliminated.

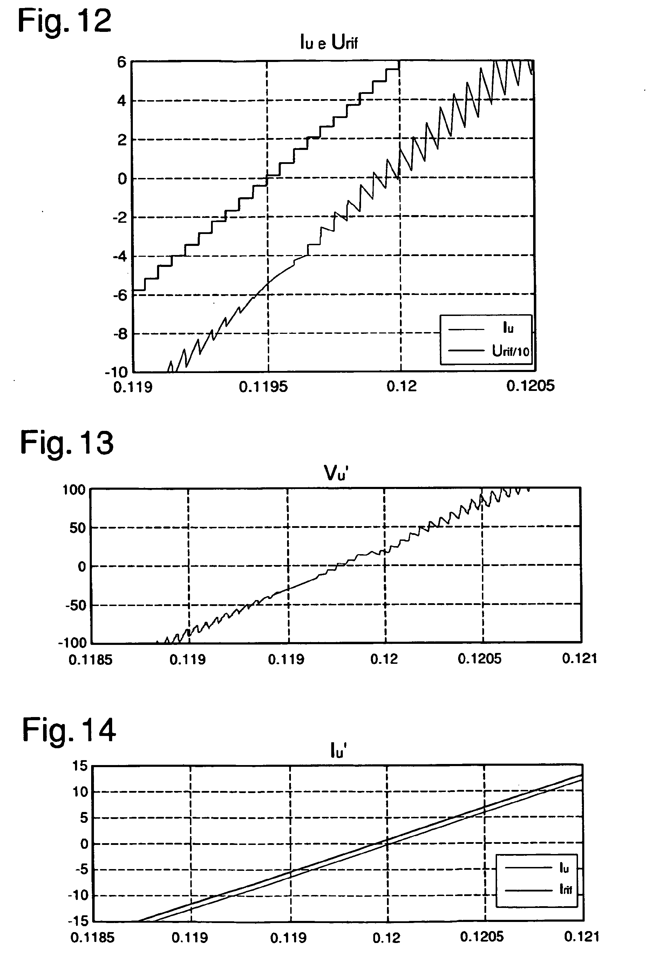

To show the correct operation of the device D, figure 12 shows the patterns of the reference voltage U_{rif} (deducted by a factor 10) at input to the modulation unit M and of the output voltage Iᵤ of the converter C_{NPC} around the zero crossing.

Finally, the figure 13 and the figure 14 show the patterns of the voltage Vᵤ' and of the output current Iᵤ' of the device D according to the invention around the zero crossing of the output current and in the case of the charge being the normal power distribution grid.

The method according to the invention includes a phase of comparison of the output current value Iᵤ with a preset positive threshold value Iₚ and with a preset negative threshold value Iₙ and a piloting phase of the converter C_{NPC} for the conversion of the direct current V_{dc} at input into the alternate output current Iᵤ, in which the converter C_{NPC} is piloted with a pulse width modulation of unipolar type when the output current value Iᵤ is above the positive threshold value Iₚ or below the negative threshold value Iₙ and with a pulse width modulation of complementary type when the output current value Iᵤ is below the positive threshold value Iₚ and above the negative threshold value Iₙ.

In particular, the piloting phase comprises a generation phase of the first, second, third and fourth control signal Pₐ, P_{b}, P_{c}, P_{d}, pulse width modulated and suitable for controlling the first, second, third and fourth switch Sₐ, S_{b}, S_{c} and S_{d}.

Advantageously, the method according to the invention comprises a generation phase of the reference signal U_{rif} and the piloting phase of the converter C_{NPC} is performed according to such reference voltage U_{rif} and according to the output current Iᵤ.

In particular, in the event of the output current value Iᵤ being above the positive threshold value Iₚ and the reference voltage U_{rif} being higher than zero, the method envisages the piloting of the converter C_{NPC} with a width pulse modulation of unipolar type in which, as shown in the figure 8:
- the first switch Sₐ is periodically switched to a preset frequency, by means of the signal Pₐ;
- the second switch S_{b} is always on;
- the third and fourth switches S_{c} and S_{d} are always off.

In the event of the output current value Iᵤ being below the negative threshold value Iₙ and the reference voltage U_{rif} being lower than zero, the method envisages the piloting of the converter C_{NPC} with a pulse width modulation of unipolar type in which, as shown in the figure 9:
- the fourth switch S_{d} is periodically switched to a preset frequency, by means of the signal P_{d};
- the third switch S_{c} is always on;
- the first and second switches Sₐ and S_{b} are always off.

In the event of the output current value Iᵤ being below the positive threshold value Iₚ and the reference voltage U_{rif} being higher than zero, the method envisages the piloting of the converter C_{NPC} with a pulse width modulation of complementary type in which, as shown in the figure 10:
- the first switch Sₐ and the third switch S_{c} are periodically switched to a preset frequency and in a complementary way to each other, by means of the signals Pₐ and P_{d} ;
- the second switch S_{b} is always on;
- the fourth switch S_{d} is always off.

In the event of the output current value Iᵤ being above the preset negative threshold value Iₙ and the reference voltage U_{rif} being lower than zero, the method envisages the piloting of the converter C_{NPC} with a pulse width modulation of complementary type in which, as shown in the figure 11:
- the second switch S_{b} and the fourth switch S_{d} are periodically switched to a preset frequency and in a complementary way to each other, by means of the signals P_{b} and P_{d} ;
- the third switch S_{c} is always on;
- the first switch Sₐ is always off.

Usefully, the method also provides a phase of generation of a reference current I_{rif} and a phase of calculation of the difference between such reference current I_{rif} and the output current Iᵤ.

The reference voltage U_{rif} to be generated at input to the modulation unit M is therefore determined according to the difference calculated between the reference current I_{rif} and the output current Iᵤ.

Finally, the method comprises a filtering phase of the output current Iᵤ by means of the filtering unit F.

It has in point of fact been ascertained how the described invention achieves the proposed objects and in particular, the fact is underlined that the device and the method for converting direct current into alternating current according to the invention, in particular the combined use of the modulation of unipolar type and of the modulation of complementary type, permit eliminating the disturbances present at the zero crossing of the output current and, at the same time, allow reducing to the indispensable utmost the amount of switching of the inverter switches.

Besides a reduction of the disturbances with respect to the modulation of unipolar type only, this also involves a reduction in energy losses compared to complementary type modulation.

In fact, compared to complementary modulation, the described invention permits reducing losses tied to switching by means of the pilot circuit of the central switches of the inverter and, furthermore, permits reducing the sizing requirements of such piloting circuit inasmuch as the central switches are only used for a small percentage of the output current period.

The described invention also allows eliminating the additional losses on the inverter diodes tied to the respective dispersion currents.

Yet another advantage is represented by the fact that the described invention permits a minor distortion of the output voltage in the unipolar modulation area due in particular to the absence of dead times which reduce the useful voltage on the charge, the reference duty cycle being equal.

## Claims

1. Device (D) for converting direct current into alternating current, comprising at least a multilevel converter (C_{NPC}) associated with at least a source of direct current (V_{dc}), at least a modulation unit (M) having piloting means for piloting said converter (C_{NPC}) for the conversion of said direct current (V_{dc}) into an alternating output current (Iᵤ) and at least a current control unit (A) operatively associated with said modulation unit (M), **characterised by** the fact that it comprises at least a source of reference current (I_{rif}) and calculation means for calculating the difference between said reference current (I_{rif}) and said output current (Iᵤ), wherein said current control unit (A) comprises generation means for generating a reference voltage (U_{rif}) and determination means for determining said reference voltage (U_{rif}) to be generated according to the difference calculated between said reference current (I_{rif}) and said output current (Iᵤ) and wherein said modulation unit (M) comprises comparison means for comparing said output current value (Iᵤ) with at least a preset positive threshold value (Iₚ) and at least a preset negative threshold value (Iₙ), said piloting means being suitable for piloting said converter (C_{NPC}) with a pulse modulation of the unipolar type in the event of said output current value (Iᵤ) being above said positive threshold value (Iₚ) and said reference voltage (U_{rif}) being above zero or in the event of said output current value (Iᵤ) being below said negative threshold value (Iₙ) and said reference voltage (U_{rif}) being lower than zero, and with a pulse modulation of the complementary type in the event of said output current value (Iᵤ) being below said positive threshold value (Iₚ) and said reference voltage (U_{rif}) being above zero and in the event of said output current value (Iᵤ) being above said negative threshold value (Iₙ) and said reference voltage (U_{rif}) being lower than zero.

2. Device (D) according to claim 1, **characterised by** the fact that said converter (C_{NPC}) comprises at least an output branch (Rᵤ) having at least a first and a second electronic switch (Sₐ and S_{b}) associated in series the one with the other between the positive pole (V_{dc}+) of said source of direct current (V_{dc}) and at least an output terminal and having at least a third and a fourth electronic switch (S_{c} and S_{d}) associated in series the one with the other between the negative pole (V_{dc}-) of said source of direct current (V_{dc}) and said output terminal, said electronic switches (Sₐ, S_{b}, S_{c}, S_{d}) being operatively associated with said piloting means of the modulation unit (M).

3. Device (D) according to claim 2, **characterised by** the fact that said converter (C_{NPC}) comprises at least an input branch (Rᵢ) having at least two condensers (C) associated in series the one with the other and having at least a terminal associated with the positive pole (V_{dc}+) of said source of direct current (V_{dc}) and at least an opposite terminal associated with the negative pole (V_{dc}-) of said source of direct current (V_{dc}), wherein said output branch (Rᵤ) comprises at least a first diode (Dₐ) with the anode associated with said input branch (Rᵢ), at a connection point (NP) between said two condensers (C), and with the cathode associated with said output branch (Rᵤ), at a connection point between said first and said second switch (Sₐ and S_{b}), and at least a second diode (D_{b}) with the cathode associated with said input branch (Rᵢ), at said connection point (NP) between said two condensers (C), and with the anode associated with said output branch (Rᵤ), at a connection point between said third and fourth switch (S_{c} and S_{d}).

4. Device (D) according to one or more of the preceding claims, **characterised by** the fact that, in the event of said output current value (Iᵤ) being above said positive threshold value (Iₚ) and said reference voltage (U_{rif}) being higher than zero, said piloting means are suitable for piloting said converter (C_{NPC}) with a pulse width modulation of unipolar type in which:
- said first switch (Sₐ) is periodically switched at a preset frequency;
- said second switch (S_{b}) is always on;
- said third and fourth switches (S_{c} and S_{d}) are always off.

5. Device (D) according to one or more of the preceding claims, **characterised by** the fact that, in the event of said output current value (Iᵤ) being below said negative threshold value (Iₙ) and said reference voltage (U_{rif}) being lower than zero, said piloting means are suitable for piloting said converter (C_{NPC}) with a pulse width modulation of unipolar type in which:
- said fourth switch (S_{d}) is periodically switched at a preset frequency;
- said third switch (S_{c}) is always on;
- said first and second switches (Sₐ and S_{b}) are always off.

6. Device (D) according to one or more of the preceding claims, **characterised by** the fact that, in the event of said output current value (Iᵤ) being below said positive threshold value (Iₚ) and said reference voltage (U_{rif}) being higher than zero, said piloting means are suitable for piloting said converter (C_{NPC}) with a pulse width modulation of complementary type in which:
- said first switch (Sₐ) and said third switch (S_{c}) are periodically switched at a preset frequency and in a complementary way to each other;
- said second switch (S_{b}) is always on;
- said fourth switch (S_{d}) is always off.

7. Device (D) according to one or more of the preceding claims, **characterised by** the fact that, in the event of said output current value (Iᵤ) being above said negative threshold value (Iₙ) and said reference voltage (U_{rif}) being lower than zero, said piloting means are suitable for piloting said converter (C_{NPC}) with a pulse width modulation of complementary type in which:
- said second switch (S_{b}) and said fourth switch (S_{d}) are periodically switched at a preset frequency and in a complementary way to each other;
- said third switch (S_{c}) is always on;
- said first switch (Sₐ) is always off.

8. Method for converting direct current into alternating current, comprising at least a piloting phase of a multilevel converter (C_{NPC}) for the conversion of a direct voltage (V_{dc}) into an alternating output current (Iᵤ), **characterised by** the fact that it comprises at least a generation phase of a reference current (I_{rif}) and at least a calculation phase of the difference between said reference current (I_{rif}) and said output current (Iᵤ), at least a determination phase for determining a reference voltage (U_{rif}) to be generated according to the difference calculated between said reference current (I_{rif}) and said output current (Iᵤ), at least a generation phase of said reference voltage (U_{rif}), and at least a comparison phase of said output current value (Iᵤ) with at least a preset positive threshold value (Iₚ) and at least a preset negative threshold value (Iₙ), said piloting phase being suitable for piloting said converter (C_{NPC}) with a pulse modulation of the unipolar type in the event of said output current value (Iᵤ) being above said positive threshold value (Iₚ) and said reference voltage (U_{rif}) being above zero or in the event of said output current value (Iᵤ) being below said negative threshold value (Iₙ) and said reference voltage (U_{rif}) being lower than zero, and with a pulse modulation of the complementary type in the event of said output current value (Iᵤ) being below said positive threshold value (Iₚ) and said reference voltage (U_{rif}) being above zero and in the event of said output current value (Iᵤ) being above said negative threshold value (In) and said reference voltage (U_{rif}) being lower than zero.

9. Method according to claim 8, **characterised by** the fact that said converter (C_{NPC}) comprises at least an output branch (Rᵤ) having at least a first and a second electronic switch (Sₐ and S_{b}) associated in series the one with the other between the positive pole (V_{dc}+) of a source of said direct voltage (V_{dc}) and at least an output terminal, and having at least a third and a fourth electronic switch (S_{c} and S_{d}) associated in series the one with the other between the negative pole (V_{dc}-) of said source of direct voltage (V_{dc}) and said output terminal.

10. Method according to claim 9, **characterised by** the fact that said converter (C_{NPC}) comprises at least an input branch (Rᵢ) having at least two condensers (C) associated in series the one with the other and having at least a terminal associated with the positive pole (V_{dc}+) of said source of direct voltage (V_{dc}) and at least an opposite terminal associated with the negative pole (V_{dc}-) of said source of direct voltage (V_{dc}), wherein said output branch (Rᵤ) comprises at least a first diode (Dₐ) with the anode associated with said input branch (Rᵢ), at a connection point (NP) between said two condensers (C), and with the cathode associated with said output branch (Rᵤ), at a connection point between said first and second switch (Sₐ and S_{b}), and at least a second diode (D_{b}) with the cathode associated with said input branch (Rᵢ), at said connection point (NP) between said two condensers (C), and with the anode associated with said output branch (Rᵤ), at a connection point between said third and fourth switch (S_{c} and S_{d}).

11. Method according to any of claims 8 to 10, **characterised by** the fact that, in the event of said output current value (Iᵤ) being above said positive threshold value (Iₚ) and said reference voltage (U_{rif}) being higher than zero, said piloting phase is suitable for piloting said converter (C_{NPC}) with a pulse width modulation of unipolar type in which:
- said first switch (Sₐ) is periodically switched to a preset frequency;
- said second switch (S_{b}) is always on;
- said third and fourth switches (S_{c} and S_{d}) are always off.

12. Method according to any of claim 8 to 11, **characterised by** the fact that, in the event of said output current value (Iᵤ) being below said negative threshold value (Iₙ) and said reference voltage (U_{rif}) being lower than zero, said piloting phase is suitable for piloting said converter (C_{NPC}) with a pulse width modulation of unipolar type in which:
- said fourth switch (S_{d}) is periodically switched to a preset frequency;
- said third switch (S_{c}) is always on;
- said first and second switches (Sₐ and S_{b}) are always off.

13. Method according to any of claims 8 to 12, **characterised by** the fact that, in the event of said output current value (Iᵤ) being below said positive threshold value (Iₚ) and said reference voltage (U_{rif}) being higher than zero, said piloting phase is suitable for piloting said converter (C_{NPC}) with a pulse width modulation of complementary type in which:
- said first switch (Sₐ) and said third switch (S_{c}) are periodically switched to a preset frequency and in a complementary way to each other;
- said second switch (S_{b}) is always on;
- said fourth switch (S_{d}) is always off.

14. Method according to any of claims 8 to 13, **characterised by** the fact that, in the event of said output current value (Iᵤ) being above said negative threshold value (Iₙ) and said reference voltage (U_{rif}) being lower than zero, said piloting phase is suitable for piloting said converter (C_{NPC}) with a pulse width modulation of complementary type in which:
- said second switch (S_{b}) and said fourth switch (S_{d}) are periodically switched to a preset frequency and in a complementary way to each other;
- said third switch (S_{c}) is always on;
- said first switch (Sₐ) is always off.

## Patentansprüche

1. Vorrichtung (D) zum Umsetzen eines Gleichstroms in einen Wechselstrom, die wenigstens einen Mehrpegel-Umsetzer (C_{NPC}), der wenigstens einer Quelle des Gleichstroms (V_{dc}) zugeordnet ist, wenigstens eine Modulationseinheit (M), die Steuermittel besitzt, um den Umsetzer (C_{NPC}) für die Umsetzung des Gleichstroms (V_{dc}) in einen Ausgangs-Wechselstrom (Iᵤ) zu steuern, und wenigstens eine Stromsteuereinheit (A), die der Modulationseinheit (M) betriebsfähig zugeordnet ist, umfasst, **dadurch gekennzeichnet, dass** sie wenigstens eine Quelle eines Referenzstroms (I_{rif}) und Berechnungsmittel zum Berechnen des Unterschieds zwischen dem Referenzstrom (I_{rif}) und dem Ausgangsstrom (Iᵤ) umfasst, wobei die Stromsteuereinheit (A) Erzeugungsmittel zum Erzeugen einer Referenzspannung (U_{rif}) und Bestimmungsmittel, um in Übereinstimmung mit dem zwischen dem Referenzstrom (I_{rif}) und dem Ausgangsstrom (Iᵤ) berechneten Unterschied die zu erzeugende Referenzspannung (U_{rif}) zu bestimmen, umfasst und wobei die Modulationseinheit (M) Vergleichsmittel zum Vergleichen des Ausgangsstromwertes (Iᵤ) mit wenigstens einem vorgegebenen positiven Schwellenwert (Iₚ) und wenigstens einem vorgegebenen negativen Schwellenwert (Iₙ) umfasst, wobei die Steuermittel geeignet sind, um den Umsetzer (C_{NPC}) mit einer Impulsmodulation des unipolaren Typs, falls der Ausgangsstromwert (Iᵤ) über dem positiven Schwellenwert (Iₚ) liegt und die Referenzspannung (U_{rif}) größer als null ist oder falls der Ausgangsstromwert (Iᵤ) unter dem negativen Schwellenwert (Iₙ) liegt und die Referenzspannung (U_{rif}) kleiner als null ist, und mit einer Impulsmodulation des komplementären Typs, falls der Ausgangsstromwert (Iᵤ) unter dem positiven Schwellenwert (Iₚ) liegt und die Referenzspannung (U_{rif}) größer als null ist und falls der Ausgangsstromwert (Iᵤ) über dem negativen Schwellenwert (Iₙ) liegt und die Referenzspannung (U_{rif}) kleiner als null ist, zu steuern.

2. Vorrichtung (D) nach Anspruch 1, **dadurch gekennzeichnet, dass** der Umsetzer (C_{NPC}) wenigstens einen Ausgangszweig (Rᵤ) umfasst, der wenigstens einen ersten und einen zweiten elektronischen Schalter (Sₐ und S_{b}), die zwischen dem positiven Pol (V_{dc}+) der Quelle des Gleichstroms (V_{dc}) und wenigstens einem Ausgangsanschluss miteinander in Reihe geschaltet sind, und wenigstens einen dritten und einen vierten elektronischen Schalter (S_{c} und S_{d}), die zwischen dem negativen Pol (V_{dc}-) der Quelle des Gleichstroms (V_{dc}) und dem Ausgangsanschluss miteinander in Reihe geschaltet sind, aufweist, wobei die elektronischen Schalter (Sₐ, S_{b}, S_{c}, S_{d}) den Steuermitteln der Modulationseinheit betriebsfähig zugeordnet sind.

3. Vorrichtung (D) nach Anspruch 2, **dadurch gekennzeichnet, dass** der Umsetzer (C_{NPC}) wenigstens einen Eingangszweig (Rᵢ) umfasst, der wenigstens zwei Kondensatoren (C) besitzt, die miteinander in Reihe geschaltet sind und von denen wenigstens ein Anschluss dem positiven Pol (V_{dc} +) der Quelle des Gleichstroms (V_{dc}) zugeordnet ist und wenigstens ein entgegengesetzter Anschluss dem negativen Pol (V_{dc}-) der Quelle des Gleichstroms (V_{dc}) zugeordnet ist, wobei der Ausgangszweig (Rᵤ) wenigstens eine erste Diode (Dₐ), deren Anode an einem Verbindungspunkt (NP) zwischen den zwei Kondensatoren (C) dem Eingangszweig (Rᵢ) zugeordnet ist und deren Kathode an einem Verbindungspunkt zwischen dem ersten und dem zweiten Schalter (Sₐ und S_{b}) dem Ausgangszweig (Rᵤ) zugeordnet ist, und wenigstens eine zweite Diode (D_{b}), deren Kathode an dem Verbindungspunkt (NP) zwischen den zwei Kondensatoren (C) dem Eingangszweig (Rᵢ) zugeordnet ist und deren Anode an einem Verbindungspunkt zwischen dem dritten und dem vierten Schalter (S_{c} und S_{d}) dem Ausgangszweig (Rᵤ) zugeordnet ist, umfasst.

4. Vorrichtung (D) nach einem oder mehreren der vorhergehenden Ansprüche, **dadurch gekennzeichnet, dass**, falls der Ausgangsstromwert (Iᵤ) über dem positiven Schwellenwert (Iₚ) liegt und die Referenzspannung (U_{rif}) größer als null ist, die Steuermittel geeignet sind, um den Umsetzer (C_{NPC} mit einer Impulsbreitenmodulation des unipolaren Typs zu steuern, wobei:
- der erste Schalter (Sₐ) mit einer vorgegebenen Frequenz periodisch geschaltet wird;
- der zweite Schalter (S_{b}) immer eingeschaltet ist; und
- der dritte und der vierte Schalter (S_{c} und S_{d}) immer ausgeschaltet sind.

5. Vorrichtung (D) nach einem oder mehreren der vorhergehenden Ansprüche, **dadurch gekennzeichnet, dass**, falls der Ausgangsstromwert (Iᵤ) unter dem negativen Schwellenwert (Iₙ) liegt und die Referenzspannung (U_{rif}) kleiner als null ist, die Steuermittel geeignet sind, um den Umsetzer (C_{NPC}) mit einer Impulsbreitenmodulation des unipolaren Typs zu steuern, wobei:
- der vierte Schalter (S_{d}) mit einer vorgegebenen Frequenz periodisch geschaltet wird;
- der dritte Schalter (S_{c}) immer eingeschaltet ist; und
- der erste und der zweite Schalter (Sₐ und S_{b}) immer ausgeschaltet sind.

6. Vorrichtung (D) nach einem oder mehreren der vorhergehenden Ansprüche, **dadurch gekennzeichnet, dass**, falls der Ausgangsstromwert (Iᵤ) unter dem positiven Schwellenwert (Iₚ) liegt und die Referenzspannung (U_{rif}) größer als null ist, die Steuermittel geeignet sind, um den Umsetzer (C_{NPC}) mit einer Impulsbreitenmodulation des komplementären Typs zu steuern, wobei:
- der erste Schalter (Sₐ) und der dritte Schalter (S_{c}) mit einer vorgegebenen Frequenz und auf eine zueinander komplementäre Art periodisch geschaltet werden;
- der zweite Schalter (S_{b}) immer eingeschaltet ist; und
- der vierte Schalter (S_{d}) immer ausgeschaltet ist.

7. Vorrichtung (D) nach einem oder mehreren der vorhergehenden Ansprüche, **dadurch gekennzeichnet, dass**, falls der Ausgangsstromwert (Iᵤ) über dem negativen Schwellenwert (Iₙ) liegt und die Referenzspannung (U_{rif}) kleiner als null ist, die Steuermittel geeignet sind, um den Umsetzer (C_{NPC}) mit einer Impulsbreitenmodulation des komplementären Typs zu steuern, wobei:
- der zweite Schalter (S_{b}) und der vierte Schalter (S_{d}) mit einer vorgegebenen Frequenz und auf eine zueinander komplementäre Art periodisch geschaltet werden;
- der dritte Schalter (S_{c}) immer eingeschaltet ist; und
- der erste Schalter (Sₐ) immer ausgeschaltet ist.

8. Verfahren zum Umsetzen eines Gleichstroms in einen Wechselstrom, das wenigstens eine Steuerphase eines Mehrpegel-Uinsetzers (C_{NPC}) für die Umsetzung einer Gleichspannung (V_{dc}) in einen Ausgangs-Wechselstrom (Iᵤ) umfasst, **dadurch gekennzeichnet, dass** es wenigstens eine Erzeugungsphase eines Referenzstroms (I_{rif}) und wenigstens eine Berechnungsphase zum Berechnen des Unterschieds zwischen dem Referenzstrom (I_{rif}) und dem Ausgangsstrom (Iᵤ), wenigstens eine Bestimmungsphase, um in Übereinstimmung mit dem zwischen dem Referenzstrom (I_{rif}) und dem Ausgangsstrom (Iᵤ) berechneten Unterschied eine zu erzeugende Referenzspannung (U_{rif}) zu bestimmen, wenigstens eine Erzeugungsphase der Referenzspannung (U_{rif)} und wenigstens eine Vergleichsphase zum Vergleichen des Ausgangsstromwerts (Iᵤ) mit wenigstens einem vorgegebenen positiven Schwellenwert (Iₚ) und wenigstens einem vorgegebenen negativen Schwellenwert (Iₙ) umfasst, wobei die Steuerphase geeignet ist, um den Umsetzer (C_{NPC}) mit einer Impulsmodulation des unipolare Typs, falls der Ausgangsstromwert (Iᵤ) über dem positiven Schwellenwert (Iₚ) liegt und die Referenzspannung (U_{rif}) größer als null ist oder falls der Ausgangsstromwert (Iᵤ) unter dem negativen Schwellenwert (Iₙ) liegt und die Referenzspannung (U_{rif}) kleiner als null ist, und mit einer Impulsmodulation des komplementären Typs, falls der Ausgangsstromwert (Iᵤ) unter dem positiven Schwellenwert (Iₚ) liegt und die Referenzspannung (U_{rif}) größer als null ist und falls der Ausgangsstromwert (Iᵤ) über dem negativen Schwellenwert (Iₙ) liegt und die Referenzspannung (U_{rif}) kleiner als null ist, zu steuern.

9. Verfahren nach Anspruch 8, **dadurch gekennzeichnet, dass** der Umsetzer (C_{NPC}) wenigstens einen Ausgangszweig (Rᵤ) umfasst, der wenigstens einen ersten und einen zweiten elektronischen Schalter (Sₐ und S_{b}), die zwischen dem positiven Pol (V_{dc}+) der Quelle des Gleichstroms (V_{dc}) und wenigstens einem Ausgangsanschluss miteinander in Reihe geschaltet sind, und wenigstens einen dritten und einen vierten elektronischen Schalter (S_{c} und S_{d}), die zwischen dem negativen Pol (V_{dc}-) der Quelle des Gleichstroms (V_{dc}) und dem Ausgangsanschluss miteinander in Reihe geschaltet sind, aufweist.

10. Verfahren nach Anspruch 9, **dadurch gekennzeichnet, dass** der Umsetzer (C_{NPC}) wenigstens einen Eingangszweig (Rᵢ) umfasst, der wenigstens zwei Kondensatoren (C) besitzt, die miteinander in Reihe geschaltet sind und von denen wenigstens ein Anschluss dem positiven Pol (V_{dc}+) der Quelle des Gleichstroms (V_{dc)} zugeordnet ist und wenigstens ein entgegengesetzter Anschluss dem negativen Pol (V_{dc}-) der Quelle des Gleichstroms (V_{dc}) zugeordnet ist, wobei der Ausgangszweig (Rᵤ) wenigstens eine erste Diode (Dₐ), deren Anode an einem Verbindungspunkt (NP) zwischen den zwei Kondensatoren (C) dem Eingangszweig (Rᵢ) zugeordnet ist und deren Kathode an einem Verbindungspunkt zwischen dem ersten und dem zweiten Schalter (Sₐ und S_{b}) dem Ausgangszweig (Rᵤ) zugeordnet ist, und wenigstens eine zweite Diode (D_{b}), deren Kathode an dem Verbindungspunkt (NP) zwischen den zwei Kondensatoren (C) dem Eingangszweig (Rᵢ) zugeordnet ist und deren Anode an einem Verbindungspunkt zwischen dem dritten und dem vierten Schalter (S_{c} und S_{d}) dem Ausgangszweig (Rᵤ) zugeordnet ist, umfasst.

11. Verfahren nach einem der Ansprüche 8 bis 10, **dadurch gekennzeichnet, dass**, falls der Ausgangsstromwert (Iᵤ) über dem positiven Schwellenwert (Iₚ) liegt und die Referenzspannung (U_{rif}) größer als null ist, die Steuerphase geeignet ist, um den Umsetzer (C_{NPC}) mit einer Impulsbreitenmodulation des unipolaren Typs zu steuern, wobei:
- der erste Schalter (Sₐ) mit einer vorgegebenen Frequenz periodisch geschaltet wird;
- der zweite Schalter (S_{b}) immer eingeschaltet ist; und
- der dritte und der vierte Schalter (S_{c} und S_{d}) immer ausgeschaltet sind.

12. Verfahren nach einem der Ansprüche 8 bis 11, **dadurch gekennzeichnet, dass**, falls der Ausgangsstromwert (Iᵤ) unter dem negativen Schwellenwert (Iₙ) liegt und die Referenzspannung (U_{rif}) kleiner als null ist, die Steuerphase geeignet ist, um den Umsetzer (C_{NPC}) mit einer Impulsbreitenmodulation des unipolaren Typs zu steuern, wobei:
- der vierte Schalter (S_{d}) mit einer vorgegebenen Frequenz periodisch geschaltet wird;
- der dritte Schalter (S_{c}) immer eingeschaltet ist; und
- der erste und der zweite Schalter (Sₐ und S_{b}) immer ausgeschaltet sind.

13. Verfahren nach einem der Ansprüche 8 bis 12, **dadurch gekennzeichnet, dass**, falls der Ausgangsstromwert (Iᵤ) unter dem positiven Schwellenwert (Iₚ) liegt und die Referenzspannung (U_{rif}) größer als null ist, die Steuerphase geeignet ist, um den Umsetzer (C_{NPC}) mit einer Impulsbreitenmodulation des komplementären Typs zu steuern, wobei:
- der erste Schalter (Sₐ) und der dritte Schalter (S_{c}) mit einer vorgegebenen Frequenz und auf eine zueinander komplementäre Art periodisch geschaltet werden;
- der zweite Schalter (S_{b}) immer eingeschaltet ist; und
- der vierte Schalter (S_{d}) immer ausgeschaltet ist.

14. Verfahren nach einem der Ansprüche 8 bis 13, **dadurch gekennzeichnet, dass**, falls der Ausgangsstromwert (Iᵤ) über dem negativen Schwellenwert (Iₙ) liegt und die Referenzspannung (U_{rif}) kleiner als null ist, die Steuerphase geeignet ist, um den Umsetzer (C_{NPC}) mit einer Impulsbreitenmodulation des komplementären Typs zu steuern, wobei:
- der zweite Schalter (S_{b}) und der vierte Schalter (S_{d}) mit einer vorgegebenen Frequenz und auf eine zueinander komplementäre Art periodisch geschaltet werden;
- der dritte Schalter (S_{c}) immer eingeschaltet ist; und
- der erste Schalter (Sₐ) immer ausgeschaltet ist.

## Revendications

1. Dispositif (D) pour convertir du courant continu en courant alternatif, comprenant au moins un convertisseur multi-niveau (C_{NPC}) associé à au moins une source de courant continu (V_{dc}), au moins une unité de modulation (M) ayant des moyens de pilotage destinés à piloter ledit convertisseur (C_{NPC}) pour la conversion dudit courant continu (V_{dc}) en un courant de sortie alternatif (Iᵤ) et au moins une unité (A) de contrôle du courant associée opérationnellement à ladite unité de modulation (M), ***caractérisé par le fait qu'**il* comprend au moins une source de courant de référence (I_{rif}) et des moyens de calcul pour calculer la différence entre ledit courant de référence (I_{rif}) et ledit courant de sortie (Iᵤ), dans lequel ladite unité (A) de contrôle du courant comprend des moyens de génération pour générer une tension de référence (U_{rif}) et des moyens de détermination pour déterminer ladite tension de référence (U_{rif}) qui doit être générée en fonction de la différence calculée entre ledit courant de référence (I_{rif}) et ledit courant de sortie (Iᵤ), et dans lequel ladite unité de modulation (M) comprend des moyens de comparaison pour comparer ladite valeur du courant de sortie (Iᵤ) à au moins une valeur de seuil positive prédéterminée (Iₚ) et à au moins une valeur de seuil négative prédéterminée (Iₙ), lesdits moyens de pilotage étant aptes à piloter ledit convertisseur (C_{NPC}) avec une modulation d'impulsion de type unipolaire dans le cas où ladite valeur du courant de sortie (Iᵤ) est supérieure à ladite valeur de seuil positive (Iₚ) et ladite tension de référence (U_{rif}) est supérieure à zéro, ou dans le cas où ladite valeur du courant de sortie (Iᵤ) est inférieure à ladite valeur de seuil négative (Iₙ) et ladite tension de référence (U_{rif}) est inférieure à zéro, et avec une modulation d'impulsion de type complémentaire dans le cas où ladite valeur du courant de sortie (Iᵤ) est inférieure à ladite valeur de seuil positive (Iₚ) et ladite tension de référence (U_{rif}) est supérieure à zéro, et dans le cas où ladite valeur du courant de sortie (Iᵤ) est supérieure à ladite valeur de seuil négative (Iₙ) et ladite tension de référence (U_{rif}) est inférieure à zéro.

2. Dispositif (D) selon la revendication 1, ***caractérisé par le fait que*** ledit convertisseur (C_{NPC}) comprend au moins une branche de sortie (Rᵤ) ayant au moins un premier et un deuxième interrupteurs électroniques (Sₐ et S_{b}), associés en série l'un à l'autre entre le pôle positif (V_{dc}+) de ladite source de courant continu (V_{dc}) et au moins un terminal de sortie, et ayant au moins un troisième et un quatrième interrupteurs électroniques (S_{c} et S_{d}) associés en série l'un à l'autre entre le pôle négatif (V_{dc}-) de ladite source de courant continu (V_{dc}) et ledit terminal de sortie, lesdits interrupteurs électroniques (Sₐ, S_{b}, S_{c}, S_{d}) étant associés opérationnellement auxdits moyens de pilotage de l'unité de modulation (M).

3. Dispositif (D) selon la revendication 2, ***caractérisé par le fait que*** ledit convertisseur (C_{NPC}) comprend au moins une branche d'entrée (Rᵢ) ayant au moins deux condensateurs (C) associés en série l'un à l'autre et ayant au moins un terminal associé au pôle positif (V_{de}+) de ladite source de courant continu (V_{dc}) et au moins un terminal opposé associé au pôle négatif (V_{dc}-) de ladite source de courant continu (V_{dc}), dans lequel ladite branche de sortie (Rᵤ) comprend au moins une première diode (Dₐ) avec l'anode associée à ladite branche d'entrée (Rᵢ), en un point de connexion (NP) situé entre lesdits deux condensateurs (C), et avec la cathode associée à ladite branche de sortie (Rᵤ), en un point de connexion situé entre ledit premier et ledit deuxième interrupteurs (Sₐ et S_{b}), et au moins une deuxième diode (D_{b}) avec la cathode associée à ladite branche d'entrée (Rᵢ), en un point de connexion (NP) situé entre lesdits deux condensateurs (C), et avec l'anode associée à ladite branche de sortie (Rᵤ), en un point de connexion situé entre lesdits troisième et quatrième interrupteurs (S_{c} et S_{d}).

4. Dispositif (D) selon l'une ou plusieurs des revendications précédentes, ***caractérisé par le fait que**,* dans le cas où ladite valeur du courant de sortie (Iᵤ) est supérieure à ladite valeur de seuil positive (Iₚ) et ladite tension de référence (U_{rif}) est supérieure à zéro, lesdits moyens de pilotage sont aptes à piloter ledit convertisseur (C_{NPC}) avec une modulation de largeur d'impulsion de type unipolaire dans laquelle :
- ledit premier interrupteur (Sₐ) est périodiquement commuté à une fréquence prédéterminée ;
- ledit deuxième interrupteur (S_{b}) est toujours sur Marche ;
- lesdits troisième et quatrième interrupteurs (S_{c} et S_{d}) sont toujours sur Arrêt.

5. Dispositif (D) selon l'une ou plusieurs des revendications précédentes, ***caractérisé par le fait que**,* dans le cas où ladite valeur du courant de sortie (Iᵤ) est inférieure à ladite valeur de seuil négative (Iₙ) et ladite tension de référence (U_{rif}) est inférieure à zéro, lesdits moyens de pilotage sont aptes à piloter ledit convertisseur (C_{NPC}) avec une modulation de largeur d'impulsion de type unipolaire dans laquelle :
- ledit quatrième interrupteur (S_{d}) est périodiquement commuté à une fréquence prédéterminée ;
- ledit troisième interrupteur (S_{c}) est toujours sur Marche ;
- lesdits premier et deuxième interrupteurs (Sₐ et S_{b}) sont toujours sur Arrêt.

6. Dispositif (D) selon l'une ou plusieurs des revendications précédentes, ***caractérisé par le fait que**,* dans le cas où ladite valeur du courant de sortie (Iᵤ) est inférieure à ladite valeur de seuil positive (Iₚ) et ladite tension de référence (U_{rif}) est supérieure à zéro, lesdits moyens de pilotage sont aptes à piloter ledit convertisseur (C_{NPC}) avec une modulation de largeur d'impulsion de type complémentaire dans laquelle :
- ledit premier interrupteur (Sₐ) et ledit troisième interrupteur (S_{c}) sont périodiquement commutés à une fréquence prédéterminée et d'une manière complémentaire entre eux ;
- ledit deuxième interrupteur (S_{b}) est toujours sur Marche ;
- ledit quatrième interrupteur (S_{d}) est toujours sur Arrêt.

7. Dispositif (D) selon l'une ou plusieurs des revendications précédentes, *caractérisé pair le fait que,* dans le cas où ladite valeur du courant de sortie (Iᵤ) est supérieure à ladite valeur de seuil négative (Iₙ) et ladite tension de référence (U_{rif}) est inférieure à zéro, lesdits moyens de pilotage sont aptes à piloter ledit convertisseur (C_{NPC}) avec une modulation de largeur d'impulsion de type complémentaire dans laquelle :
- ledit deuxième interrupteur (S_{b}) et ledit quatrième interrupteur (S_{d}) sont périodiquement commutés à une fréquence prédéterminée et d'une manière complémentaire entre eux ;
- ledit troisième interrupteur (S_{c}) est toujours sur Marche ;
- ledit premier interrupteur (Sₐ) est toujours sur Arrêt.

8. Procédé pour convertir du courant continu en courant alternatif, comprenant au moins une phase de pilotage d'un convertisseur multi-niveau (C_{NPC}) pour la conversion d'un courant continu (V_{dc}) en un courant de sortie alternatif (Iᵤ), ***caractérisé par** le fait qu*'il comprend au moins une phase de génération d'un courant de référence (I_{rif}) et au moins une phase de calcul de la différence entre ledit courant de référence (I_{rif}) et ledit courant de sortie (Iᵤ), au moins une phase de détermination pour déterminer une tension de référence (U_{rif}) à générer en fonction de la différence calculée entre ledit courant de référence (I_{rif}) et ledit courant de sortie (Iᵤ), au moins une phase de génération de ladite tension de référence (U_{rif}), et au moins une phase de comparaison de ladite valeur du courant de sortie (Iᵤ) avec au moins une valeur de seuil positive prédéterminée (Iₚ) et au moins une valeur de seuil négative prédéterminée (Iₙ), ladite phase de pilotage étant apte à piloter ledit convertisseur (C_{NPC}) avec une modulation d'impulsion de type unipolaire dans le cas où ladite valeur du courant de sortie (Iᵤ) est supérieure à ladite valeur de seuil positive (Iₚ) et ladite tension de référence (U_{rif}) est supérieure à zéro, ou dans le cas où ladite valeur du courant de sortie (Iᵤ) est inférieure à ladite valeur de seuil négative (Iₙ) et ladite tension de référence (U_{rif}) est inférieure à zéro, et avec une modulation d'impulsion de type complémentaire dans le cas où ladite valeur du courant de sortie (Iᵤ) est inférieure à ladite valeur de seuil positive (Iₚ) et ladite tension de référence (U_{rif}) est supérieure à zéro, et dans le cas où ladite valeur du courant de sortie (Iᵤ) est supérieure à ladite valeur de seuil négative (Iₙ) et ladite tension de référence (U_{rif}) est inférieure à zéro.

9. Procédé selon la revendication 8, ***caractérisé par le fait que*** ledit convertisseur (C_{NPC}) comprend au moins une branche de sortie (Rᵤ) ayant au moins un premier et un deuxième interrupteurs électroniques (Sₐ et S_{b}) associés en série l'un à l'autre entre le pôle positif (V_{dc}+) d'une source dudit courant continu (V_{dc}) et au moins un terminal de sortie, et ayant au moins un troisième et un quatrième interrupteurs électroniques (S_{c} et S_{d}) associés en série l'un à l'autre entre le pôle négatif (V_{dc}-) de ladite source de courant continu (V_{dc}) et ledit terminal de sortie.

10. Procédé selon la revendication 9, ***caractérisé par le fait que*** ledit convertisseur (C_{NPC}) comprend au moins une branche d'entrée (Rᵢ) ayant au moins deux condensateurs (C) associés en série l'un à l'autre et ayant au moins un terminal associé au pôle positif (V_{dc}+) de ladite source de courant continu (V_{dc}) et au moins un terminal opposé associé au pôle négatif (V_{dc}-) de ladite source de courant continu (V_{dc}), dans lequel ladite branche de sortie (Rᵤ) comprend au moins une première diode (Dₐ) avec l'anode associée à ladite branche d'entrée (Rᵢ), en un point de connexion (NP) situé entre lesdits deux condensateurs (C), et avec la cathode associée à ladite branche de sortie (Rᵤ), en un point de connexion situé entre ledit premier et ledit deuxième interrupteurs (Sₐ et S_{b}), et au moins une deuxième diode (D_{b}) avec la cathode associée à ladite branche d'entrée (Rᵢ), en un point de connexion (NP) situé entre lesdits deux condensateurs (C), et avec l'anode associée à ladite branche de sortie (Rᵤ), en un point de connexion situé entre lesdits troisième et quatrième interrupteurs (S_{c} et S_{d}).

11. Procédé selon l'une quelconque des revendications 8 à 10, ***caractérisé par le fait que**,* dans le cas où ladite valeur du courant de sortie (Iᵤ) est supérieure à ladite valeur de seuil positive (Iₚ) et ladite tension de référence (U_{rif}) est supérieure à zéro, ladite phase de pilotage est apte à piloter ledit convertisseur (C_{NPC}) avec une modulation de largeur d'impulsion de type unipolaire dans laquelle :
- ledit premier interrupteur (Sₐ) est périodiquement commuté à une fréquence prédéterminée ;
- ledit deuxième interrupteur (S_{b}) est toujours sur Marche ;
- lesdits troisième et quatrième interrupteurs (S_{c} et S_{d}) sont toujours sur Arrêt.

12. Procédé selon l'une quelconque des revendications 8 à 11, ***caractérisé par le fait que**,* dans le cas où ladite valeur du courant de sortie (Iᵤ) est inférieure à ladite valeur de seuil négative (Iₙ) et ladite tension de référence (U_{rif}) est inférieure à zéro, ladite phase de pilotage est apte à piloter ledit convertisseur (C_{NPC}) avec une modulation de largeur d'impulsion de type unipolaire dans laquelle :
- ledit quatrième interrupteur (S_{d}) est périodiquement commuté à une fréquence prédéterminée ;
- ledit troisième interrupteur (S_{c}) est toujours sur Marche ;
- lesdits premier et deuxième interrupteurs (Sₐ et S_{b}) sont toujours sur Arrêt.

13. Procédé selon l'une quelconque des revendications 8 à 12, ***caractérisé par le fait que**,* dans le cas où ladite valeur du courant de sortie (Iᵤ) est inférieure à ladite valeur de seuil positive (Iₚ) et ladite tension de référence (U_{rif}) est supérieure à zéro, ladite phase de pilotage est apte à piloter ledit convertisseur (C_{NPC}) avec une modulation de largeur d'impulsion de type complémentaire dans laquelle :
- ledit premier interrupteur (Sₐ) et ledit troisième interrupteur (S_{c}) sont périodiquement commutés à une fréquence prédéterminée et d'une manière complémentaire entre eux ;
- ledit deuxième interrupteur (S_{b}) est toujours sur Marche ;
- ledit quatrième interrupteur (S_{d}) est toujours sur Arrêt.

14. Procédé selon l'une quelconque des revendications 8 à 13, ***caractérisé par le fait* que**, dans le cas où ladite valeur du courant de sortie (Iᵤ) est supérieure à ladite valeur de seuil négative (Iₙ) et ladite tension de référence (U_{rif}) est inférieure à zéro, ladite phase de pilotage est apte à piloter ledit convertisseur (C_{NPC}) avec une modulation de largeur d'impulsion de type complémentaire dans laquelle :
- ledit deuxième interrupteur (S_{b}) et ledit quatrième interrupteur (S_{d}) sont périodiquement commutés à une fréquence prédéterminée et d'une manière complémentaire entre eux ;
- ledit troisième interrupteur (S_{c}) est toujours sur Marche ;
- ledit premier interrupteur (Sₐ) est toujours sur Arrêt.
